# EUROPÄISCHE PATENTSCHRIFT

(11) **EP 3 409 540 B1**
(45) Veröffentlichungstag und Bekanntmachung des Hinweises auf die Patenterteilung: **29.06.2022**
(21) Anmeldenummer: 18171970.9
(22) Anmeldetag: 14.05.2018
(51) Int. Cl.: B60R 11/04

(54) **SPIEGELERSATZ- ODER SPIEGELERGÄNZUNGSKONSTRUKTION MIT POSITIONIERUNGSERKENNUNG**
MIRROR REPLACEMENT OR MIRROR SUPPLEMENTING STRUCTURE WITH POSITIONING DETECTION
CONSTRUCTION DE REMPLACEMENT DE MIROIR OU CONSTRUCTION DE COMPLÉMENTARITÉ DE MIROIR À RECONNAISSANCE DE POSITIONNEMENT

(30) Priorität: 01.06.2017 DE 102017112062
(43) Veröffentlichungstag der Anmeldung: 05.12.2018
(73) Patentinhaber: MAN Truck & Bus SE, 80995 München (DE)
(72) Erfinder: Hackl, Andreas, 81829 München (DE); Zaindl, Albert, 85302 Gerolsbach (DE)
(74) Vertreter: v. Bezold & Partner Patentanwälte - PartG mbB

(56) Entgegenhaltungen:
- EP-A1- 2 955 065
- DE-A1-102013 018 022
- DE-A1-102016 108 924
- US-A1- 2015 165 975
- US-A1- 2016 243 988

## Beschreibung

Die Erfindung betrifft eine Vorrichtung, insbesondere eine Spiegelersatzkonstruktion mit einer Halterungseinrichtung zur Anordnung an einem Kraftfahrzeug, wobei die Halterungseinrichtung zumindest eine Kamera, zweckmäßig zur Erfassung eines Bereichs seitlich neben und/oder hinter dem Kraftfahrzeug, aufweist. Die Erfindung betrifft auch ein Kraftfahrzeug mit zumindest einer solchen Vorrichtung.

Spiegelersatzkonstruktionen für Kraftfahrzeuge sind im Stand der Technik bereits bekannt. Sie umfassen üblicherweise eine Halterungseinrichtung mit einer Kamera zur Montage an das Kraftfahrzeug. Die Kamera dient dabei zweckmäßig zur Erfassung eines Bereichs seitlich neben und hinter dem Kraftfahrzeug, wobei ein Display im Kraftfahrzeug dazu dient, den erfassten Bereich für den Fahrer des Kraftfahrzeugs anzuzeigen. Nachteilhaft an derartigen Spiegelersatzkonstruktionen ist, dass die Halterungseinrichtung und somit die Kamera z. B. durch eine Kollision mit einem anderen Objekt zumindest geringfügig aus ihrer ordnungsgemäßen Betriebsposition befördert werden kann, was für den Fahrer des Kraftfahrzeugs in manchen Fällen nicht unmittelbar erkenntlich ist. Eine nicht ordnungsgemäß ausgerichtete Kamera birgt die Gefahr, dass die Kamera nicht mehr alle relevanten Bereiche seitlich neben und hinter dem Kraftfahrzeug erfassen kann.

Eine Aufgabe der Erfindung ist es deshalb, eine Vorrichtung der eingangs beschriebenen Art zu schaffen, welche insbesondere hohen Sicherheitsansprüchen gerecht werden kann.

Diese Aufgabe kann mit den Merkmalen des unabhängigen Anspruchs 1 gelöst werden. Vorteilhafte Weiterbildungen der Erfindung können dem Nebenanspruch und den Unteransprüchen sowie der folgenden Beschreibung bevorzugter Ausführungsformen der Erfindung entnommen werden.

Die Erfindung betrifft eine Vorrichtung, nämlich eine Spiegelersatzkonstruktion mit einer Halterungseinrichtung zur Anordnung an einem Kraftfahrzeug, z. B. einem Nutzfahrzeug, wie etwa einem Lastkraftwagen oder einem Omnibus.

Die Halterungseinrichtung umfasst zumindest eine Kamera, zur Erfassung (z. B. Aufnahme) eines Bereichs zweckmäßig seitlich neben und/oder hinter dem Kraftfahrzeug.

Die Vorrichtung zeichnet sich insbesondere dadurch aus, dass sie zumindest eine Erkennungseinrichtung aufweist, zur Erkennung, ob die Halterungseinrichtung und somit zweckmäßig die zumindest eine Kamera in einer Nicht-Betriebsposition (z. B. Nicht-Betriebsausrichtung) am Kraftfahrzeug angeordnet ist und die Nicht-Betriebsposition (NBP) eine fehlerhafte Position umfasst, wobei die Erkennungseinrichtung zumindest einen Sensor, Schalter oder Taster umfasst.

Die Erkennungseinrichtung dient im Kontext der Erfindung somit vorzugsweise dazu, zu erkennen, ob die Halterungseinrichtung in der Betriebsposition (z. B. Normalposition-/ausrichtung) oder außerhalb der Betriebsposition angeordnet ist.

Die zumindest eine Erkennungseinrichtung dient zur Erkennung, ob die Halterungseinrichtung und somit zweckmäßig die zumindest eine Kamera in einer Betriebsposition (z. B. Betriebsausrichtung) am Kraftfahrzeug angeordnet ist.

Es ist möglich, dass die Halterungseinrichtung vorzugsweise über ein Dreh- oder Schwenkgelenk zur einklappbaren und ausklappbaren Montage an das Kraftfahrzeug ausgebildet.

Die Betriebsposition kann zweckmäßig eine funktionsgerecht ausgerichtete und/oder eine ordnungsgemäß ausgeklappte Position (z. B. Ausrichtung) der Halterungseinrichtung umfassen, in der vorzugsweise die zumindest eine Kamera zur Erfassung des Bereichs zweckmäßig seitlich neben und/oder hinter dem Kraftfahrzeug korrekt ausgerichtet ist.

Die Nicht-Betriebsposition kann zweckmäßig eine fehlerhafte Position (z. B. Ausrichtung) der Halterungseinrichtung umfassen, in der z. B. die zumindest eine Kamera zur Erfassung des Bereichs zweckmäßig seitlich neben und/oder hinter dem Kraftfahrzeug fehlerhaft ausgerichtet ist, z. B. verursacht durch eine Kollision der Halterungseinrichtung mit einem anderen Objekt. Alternativ oder ergänzend kann die Nicht-Betriebsposition aber auch eine ordnungsgemäß eingeklappte Position (z. B. Ausrichtung) der Halterungseinrichtung umfassen.

Es ist möglich, dass die Halterungseinrichtung als Haltearm ausgebildet ist und/oder die Erkennungseinrichtung elektrisch-basiert arbeitet.

Die Vorrichtung kann eine Montageeinrichtung aufweisen, mittels der die Halterungseinrichtung am Kraftfahrzeug montierbar ist. Alternativ oder ergänzend kann die Vorrichtung eine Verbindungseinrichtung aufweisen, mittels der Informationen, ob die Halterungseinrichtung in einer Betriebsposition und/oder einer Nicht-Betriebsposition am Kraftfahrzeug angeordnet ist, in das Kraftfahrzeug übertragbar sind. Die Verbindungseinrichtung kann z. B. eine oder mehrere Leitungen umfassen, aber auch z. B. zur drahtlosen Übertragung der Informationen vorzugsweise per Funk ausgebildet sein.

Bei einer besonders bevorzugten Ausführungsform kann die Verbindungseinrichtung in die Montageeinrichtung eingearbeitet sein, so dass die Verbindungseinrichtung und die Montageeinrichtung z. B. als eine Baueinheit ausgebildet sein können.

Die Verbindungseinrichtung kann aber auch an oder in der Halterungseinrichtung angeordnet sein.

Die Montageeinrichtung kann hierbei z. B. als eine Grundplatte ausgebildet sein, die zweckmäßig an die Geometrie des Kraftfahrzeugs angepasst sein kann und somit im Wesentlichen flach oder gekrümmt ausgeformt sein kann.

Die Erfindung umfasst auch ein Kraftfahrzeug, vorzugsweise ein Nutzfahrzeug, wie etwa ein Omnibus oder ein Lastkraftwagen, mit zumindest einer Vorrichtung wie hierin offenbart.

Es ist möglich, dass das Kraftfahrzeug eine Einrichtung aufweist, um einen Fahrer des Kraftfahrzeugs optisch (z. B. mittels einer Anzeigevorrichtung wie etwa einem Display, einem Monitor, LEDs usw.), akustisch (z. B. über einen Lautsprecher) und/oder haptisch (z. B. über eine Vibrationseinrichtung im Lenkrad oder Sitz) zu warnen, dass die Halterungseinrichtung in der Nicht-Betriebsposition am Kraftfahrzeug angeordnet ist, und/oder darauf hinzuweisen, dass die Halterungsvorrichtung in der Betriebsposition am Kraftfahrzeug angeordnet ist.

Besonders bevorzugt ist, wenn die Vermittlung, also insbesondere die Warnung oder der Hinweis, vor Fahrtbeginn, z. B. beim Motorstart des Kraftfahrzeugs, oder bei Fahrtbeginn des Kraftfahrzeugs erzeugt wird.

Die Erkennungseinrichtung kann z. B. mit einer Anzeigeeinrichtung im Kraftfahrzeug in Verbindung stehen, wobei die Anzeigeeinrichtung dazu ausgeführt sein kann, um einem Fahrer des Kraftfahrzeugs anzuzeigen, dass die Halterungseinrichtung in einer Betriebsposition und/oder einer Nicht-Betriebsposition am Kraftfahrzeug angeordnet ist.

Es ist möglich, dass das Kraftfahrzeug ein mit der zumindest einen Kamera wirkverbundenes Display (z. B. ein Monitor oder eine andere geeignete Anzeigevorrichtung) zum Anzeigen des durch die zumindest eine Kamera erfassten Bereichs aufweist.

Das Kraftfahrzeug kann z. B. eine automatische Aktivierungsfunktion aufweisen, um das Display und/oder die zumindest eine Kamera automatisch zu aktivieren, wenn eine Zündung des Kraftfahrzeugs (z. B. sogenannte Klemme 15 "aus") deaktiviert ist und eine Türe des Kraftfahrzeugs (z. B. Fahrer- und/oder Beifahrertüre, z. B. eines Fahrerhauses eines Lastkraftwagens) geöffnet oder geschlossen wird. Es ist hierbei möglich, dass die automatische Aktivierungsfunktion durch eine ordnungsgemäß eingeklappte Halterungseinrichtung deaktivierbar ist, so dass trotz automatischer Aktivierungsfunktion keine automatische Aktivierung des Displays und/oder der zumindest einen Kamera erfolgt.

Das Display und/oder die zumindest eine Kamera kann, vorzugsweise trotz der automatischen Aktivierungsfunktion, deaktiviert werden und/oder deaktiviert bleiben, wenn die Erkennungseinrichtung erkennt, dass die Halterungseinrichtung in der Nicht-Betriebsposition, insbesondere in der ordnungsgemäß eingeklappten Position ist.

Zu erwähnen ist, dass im Kontext der Erfindung das Merkmal "Kamera" breit auszulegen ist und insbesondere allgemein Aufnahmevorrichtungen zur Erfassung (zweckmäßig Aufnahme) z. B. eines Bereichs seitlich neben und/oder hinter dem Kraftfahrzeug umfassen kann.

Das Merkmal "Erkennungseinrichtung" ist im Kontext der Erfindung ebenfalls breit auszulegen und umfasst insbesondere Einrichtungen, mittels denen erkannt, z.B. erfasst und/oder detektiert, werden kann, ob die Halterungseinrichtung in einer Betriebsposition und/oder einer Nicht-Betriebsposition am Kraftfahrzeug angeordnet ist.

Die Erkennungseinrichtung dient im Kontext der Erfindung vorzugsweise dazu, zu erkennen, ob die Halterungseinrichtung in der Betriebsposition (z. B. Normalposition-/stellung) oder außerhalb der Betriebsposition steht.

Die Halterungseinrichtung kann wie erwähnt als (vorzugsweise vom Kraftfahrzeug relativ weit abstehender) Haltearm ausgebildet sein, aber auch z. B. als (vorzugsweise vom Kraftfahrzeug relativ wenig abstehendes) Kameragehäuse.

Die zuvor beschriebenen Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine schematische Darstellung einer Vorrichtung gemäß einer Ausführungsform der Erfindung in einer Betriebsposition,
- Figur 2: zeigt eine schematische Darstellung der in Figur 1 gezeigten Vorrichtung in einer Nicht-Betriebsposition, insbesondere einer fehlerhaften Position, und
- Figur 3: zeigt eine schematische Darstellung der Vorrichtung der Figuren 1 und 2 in einer Nicht-Betriebsposition, insbesondere einer ordnungsgemäß eingeklappten Position.

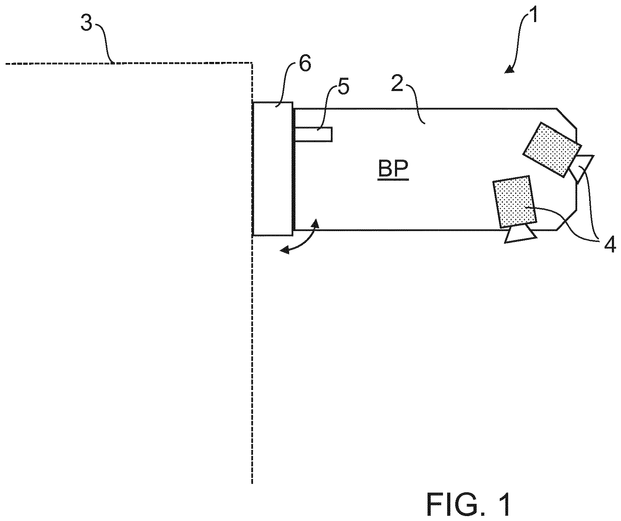

Figur 1 zeigt eine stark schematische Darstellung einer Vorrichtung 1, insbesondere einer Spiegelersatzkonstruktion mit einer Halterungseinrichtung 2 zur Anordnung an einem Kraftfahrzeug 3. Die Halterungseinrichtung 2 ist als relativ langer Haltearm gezeigt, kann aber auch als relativ kompaktes Kameragehäuse ausgebildet werden.

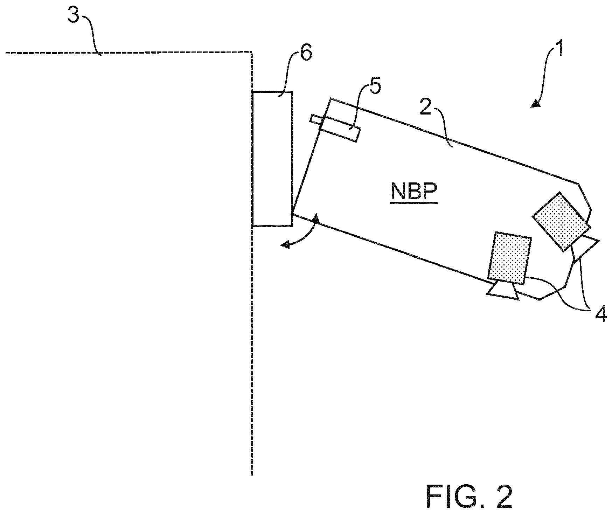

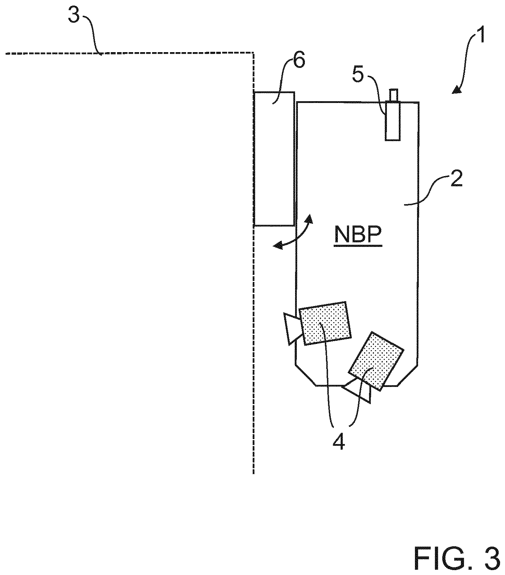

Die Halterungseinrichtung 2 umfasst in der dargestellten Ausführungsform zwei Kameras 4 zur Erfassung, insbesondere Aufnahme, eines Bereichs seitlich neben und/oder hinter dem Kraftfahrzeug 3. Die Halterungseinrichtung 2 ist über ein Dreh- oder Schwenkgelenk zur einklappbaren und ausklappbaren Montage an das Kraftfahrzeug 3 ausgebildet, was in Figur 1 durch den Doppelpfeil schematisch angedeutet ist. Die Kameras 4 sind mit einem Display im Kraftfahrzeug 3 wirkverbunden, zum Anzeigen des durch die Kameras 4 erfassten Bereichs. Die Vorrichtung 1 umfasst eine elektrisch-arbeitende Erkennungseinrichtung 5 mit zumindest einem Taster oder Sensor. Die Erkennungseinrichtung 5 ist ausgeführt, um zu erkennen, ob die Halterungseinrichtung 2 und somit die Kameras 4 in einer Betriebsposition-/ausrichtung BP und/oder einer Nicht-Betriebsposition-/ausrichtung NBP (Figuren 2 und 3) am Kraftfahrzeug 3 angeordnet ist.

Figur 1 zeigt die Halterungseinrichtung 2 und somit die Kameras 4 in einer Betriebsposition BP, insbesondere in einer funktionsgerecht ausgerichteten und ordnungsgemäß ausgeklappten Position.

Die Halterungseinrichtung 2 ist über eine als Grundplatte ausgebildete Montageeinrichtung 6 an das Kraftfahrzeug 3 montiert. In die Grundplatte 6 ist eine nicht dargestellte Verbindungseinrichtung, z. B. eine oder mehrere Leitungen, eingearbeitet, über die Informationen, ob die Halterungseinrichtung 2 in einer Betriebsposition BP und/oder einer Nicht-Betriebsposition NBP am Kraftfahrzeug 3 angeordnet ist, in das Kraftfahrzeug 3 übertragbar sind. Die Verbindungseinrichtung kann auch zur drahtlosen Übermittlung der Informationen ausgeführt sein.

Figur 2 zeigt eine stark schematische Darstellung der Vorrichtung 1 der Figur 1.

In Figur 2 sind die Halterungseinrichtung 2 und somit die Kameras 4 in einer Nicht-Betriebsposition NPB gezeigt, insbesondere in einer fehlerhaften Position, z. B. verursacht durch eine Kollision mit einem anderen Objekt.

Figur 3 zeigt eine stark schematische Darstellung der Vorrichtung 1 der Figuren 1 und 2.

In Figur 3 sind die Halterungseinrichtung 2 und somit die Kameras 4 ebenfalls in einer Nicht-Betriebsposition NPB gezeigt. Im Gegensatz zu Figur 2 zeigt die Figur 3 die Halterungseinrichtung 2 zwar in einer Nicht-Betriebsposition NBP, allerdings in einer ordnungsgemäßen, z. B. wunschgemäß durch den Fahrer händisch oder automatisch eingeklappten Position.

Die durch die Erkennungseinrichtung 5 erkannten Informationen sind im Rahmen der Erfindung auf unterschiedliche Art und Weise nutzbar.

Das Kraftfahrzeug 3 kann z. B. eine oder mehrere in den Figuren nicht gezeigte Einrichtungen aufweisen, um einen Fahrer des Kraftfahrzeugs 3 optisch (z. B. mittels einer Anzeigeeinrichtung wie etwa einem Monitor, einem Display, LEDs, usw.), akustisch (z. B. mittels Lautsprechern) und alternativ oder ergänzend haptisch (z. B. mittels einer Vibrationseinrichtung im Lenkrad oder Sitz) zu warnen, wenn die Halterungseinrichtung 2 in der Nicht-Betriebsposition NBP am Kraftfahrzeug 3 angeordnet ist. Auf die gleiche Art und Weise kann der Fahrer darauf hingewiesen werden, wenn die Halterungsvorrichtung 2 in der Betriebsposition BP am Kraftfahrzeug 3 angeordnet ist. Die Warnung und/oder der Hinweis kann zweckmäßig vor Fahrtbeginn, z. B. beim Motorstart, oder allgemein bei Fahrtbeginn erzeugt werden.

Nach ECE R46 muss im Stillstand eines Kraftfahrzeugs ("Klemme 15 aus") das Spiegelersatzsystem immer aktiviert werden, wenn eine Türe des Kraftfahrzeugs betätigt wird, was zu einem hohen Energieverbrauch führt. Eine ordnungsgemäß eingeklappte Halterungsvorrichtung ist dabei wie ein eingeklappter Spiegel einzuordnen.

Auch das hierin offenbarte Kraftfahrzeug 3 kann zuvor erwähnte Forderung nach ECE R46 erfüllen und somit eine automatische Aktivierungsfunktion aufweisen, um die Kameras 4 und das Display zur Anzeige des durch die Kameras 4 erfassten Bereichs automatisch zu aktivieren, wenn eine Zündung des Kraftfahrzeugs 3 deaktiviert ist und eine Türe des Kraftfahrzeugs 3 geöffnet oder geschlossen wird. Allerdings kann die automatische Aktivierungsfunktion durch eine mittels der Erkennungseinrichtung 5 erkannte, ordnungsgemäß eingeklappte Halterungseinrichtung 2 deaktiviert werden. Das System aus Display und Kameras 4 muss im Fall einer ordnungsgemäß eingeklappten Halterungseinrichtung 2 somit nicht aktiviert werden, wenn die Türe geöffnet wird. Der Fahrer kann somit die automatische Aktivierung im Bedarfsfall ausschalten, indem die Halterungseinrichtung 2 eingeklappt wird. Dies ist beispielsweise bei einem langen Stillstand (z. B. Wochenende auf einem Rasthof) sinnvoll. Dadurch kann Energie eingespart werden.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von den in Bezug genommenen Merkmalen und Ansprüchen.

### Bezugszeichenliste

- 1: Vorrichtung, Spiegelersatzkonstruktion

- 2: Halterungseinrichtung
- 3: Kraftfahrzeug
- 4: Zumindest eine Kamera
- 5: Erkennungseinrichtung
- 6: Montageeinrichtung
- BP: Betriebsposition-/ausrichtung
- NBP: Nicht-Betriebsposition-/ausrichtung

## Patentansprüche

1. Vorrichtung (1), nämlich Spiegelersatzkonstruktion (1) , mit einer Halterungseinrichtung (2) zur Anordnung an einem Kraftfahrzeug (3), wobei die Halterungseinrichtung (2) zumindest eine Kamera (4) zur Erfassung eines Bereichs seitlich neben und/oder hinter dem Kraftfahrzeug (3), umfasst, , wobei die Vorrichtung (1) zumindest eine Erkennungseinrichtung (5) aufweist, um zu erkennen, ob die Halterungseinrichtung (2) und somit die zumindest eine Kamera (4) in einer Nicht-Betriebsposition (NBP) am Kraftfahrzeug (3) angeordnet ist und die Nicht-Betriebsposition (NBP) eine fehlerhafte Position umfasst, wobei die Erkennungseinrichtung (5) zumindest einen Sensor, Schalter oder Taster umfasst.

2. Vorrichtung (1) nach Anspruch 1, **dadurch gekennzeichnet, dass** die Halterungseinrichtung (2) zur einklappbaren und ausklappbaren Montage an das Kraftfahrzeug (3) ausgebildet ist.

3. Vorrichtung (1) nach einem der vorhergehenden Ansprüche, **dadurch gekennzeichnet, dass** die Betriebsposition (BP) eine funktionsgerecht ausgerichtete und/oder ordnungsgemäß ausgeklappte Position der Halterungseinrichtung (2) umfasst.

4. Vorrichtung (1) nach einem der vorhergehenden Ansprüche, **dadurch gekennzeichnet, dass** die Erkennungseinrichtung (5) ausgeführt ist, um zu erkennen, ob die Halterungseinrichtung (2) in einer Betriebsposition (BP) am Kraftfahrzeug (3) angeordnet ist und/oder die Nicht-Betriebsposition (NBP) eine ordnungsgemäß eingeklappte Position der Halterungseinrichtung (2) umfasst.

5. Vorrichtung (1) nach einem der vorhergehenden Ansprüche, **dadurch gekennzeichnet, dass** die Halterungseinrichtung (2) als Haltearm ausgebildet ist und/oder die Erkennungseinrichtung (5) elektrisch-basiert arbeitet.

6. Vorrichtung (1) nach einem der vorhergehenden Ansprüche, **dadurch gekennzeichnet, dass** die Vorrichtung (1) zumindest eine Montageeinrichtung (6) aufweist, mittels der die Halterungseinrichtung (2) am Kraftahrzeug (3) montierbar ist und/oder zumindest eine Verbindungseinrichtung aufweist, mittels der Informationen, ob die Halterungseinrichtung (2) in einer Betriebsposition (BP) und/oder einer Nicht-Betriebsposition (NBP) am Kraftfahrzeug (2) angeordnet ist, in das Kraftfahrzeug (3) übertragbar sind.

7. Vorrichtung nach Anspruch 6, **dadurch gekennzeichnet, dass** die Verbindungseinrichtung in die Montageeinrichtung (6) eingearbeitet ist und die Montageeinrichtung (6) als Grundplatte ausgebildet ist.

8. Kraftfahrzeug (3), mit zumindest einer Vorrichtung (1) nach einem der vorhergehenden Ansprüche.

9. Kraftfahrzeug (3) nach Anspruch 8, **dadurch gekennzeichnet, dass** das Kraftfahrzeug (3) eine Einrichtung aufweist, um einen Fahrer des Kraftfahrzeugs (3) optisch, akustisch und/oder haptisch zu vermitteln,
- dass die Halterungseinrichtung (2) in der Nicht-Betriebsposition (NBP) am Kraftfahrzeug (2) angeordnet ist, und/oder
- dass die Halterungseinrichtung (2) in der Betriebsposition (BP) am Kraftfahrzeug (3) angeordnet ist.

10. Kraftfahrzeug (3) nach Anspruch 8 oder 9, **dadurch gekennzeichnet, dass** die Vermittlung vor Fahrtbeginn, insbesondere beim Motorstart, oder bei Fahrtbeginn des Kraftfahrzeugs (3) erzeugt wird.

11. Kraftfahrzeug (3) nach einem der Ansprüche 8 bis 10, **dadurch gekennzeichnet, dass** die Erkennungseinrichtung (5) mit einer Anzeigeeinrichtung im Kraftfahrzeug (3) in Verbindung steht und die Anzeigeeinrichtung dazu ausgeführt ist, um einem Fahrer des Kraftfahrzeugs (3) anzuzeigen, dass die Halterungseinrichtung (2) in einer Betriebsposition (BP) und/oder einer Nicht-Betriebsposition (NBP) am Kraftfahrzeug (3) angeordnet ist.

12. Kraftfahrzeug (3) nach einem der 8 bis 11, **dadurch gekennzeichnet, dass** das Kraftfahrzeug (3) ein mit der zumindest einen Kamera (4) wirkverbundenes Display zum Anzeigen des durch die zumindest eine Kamera (4) erfassten Bereichs aufweist.

13. Kraftfahrzeug (3) nach einem der Ansprüche 8 bis 12, **dadurch gekennzeichnet, dass** das Kraftfahrzeug (3) eine automatische Aktivierungsfunktion aufweist, um das Display und/oder die zumindest eine Kamera (4) automatisch zu aktivieren, wenn eine Zündung des Kraftfahrzeugs (3) deaktiviert ist und eine Türe des Kraftfahrzeugs (3) geöffnet oder geschlossen wird und vorzugsweise die automatische Aktivierungsfunktion durch eine ordnungsgemäß eingeklappte Halterungseinrichtung (2) deaktivierbar ist.

14. Kraftfahrzeug (3) nach einem der Ansprüche 8 bis 13, **dadurch gekennzeichnet, dass** das Display und/oder die zumindest eine Kamera (4), vorzugsweise trotz der automatischen Aktivierungsfunktion, deaktiviert wird oder deaktiviert bleibt, wenn die Erkennungseinrichtung (5) erkennt, dass die Halterungseinrichtung (2) in der Nicht-Betriebsposition (NBP) ist, insbesondere der ordnungsgemäß eingeklappten Position ist.

## Claims

1. Apparatus (1), specifically mirror replacement structure (1), having a holding device (2) for arrangement on a motor vehicle (3), wherein the holding device (2) comprises at least one camera (4) for capturing a region laterally next to and/or behind the motor vehicle (3), wherein the apparatus (1) has at least one detection device (5) for detecting whether the holding device (2), and thus the at least one camera (4), is arranged on the motor vehicle (3) in a non-operational position (NBP) and the non-operational position (NBP) comprises an incorrect position, wherein the detection device (5) comprises at least one sensor, switch or feeler.

2. Apparatus (1) according to Claim 1, **characterized in that** the holding device (2) is embodied for being mounted on the motor vehicle (3) in a manner such that it may be folded in and out.

3. Apparatus (1) according to either one of the preceding claims, **characterized in that** the operational position (BP) comprises a position of the holding device (2) in which it is aligned appropriately in terms of function and/or is correctly folded out.

4. Apparatus (1) according to any one of the preceding claims, **characterized in that** the detection device (5) is configured to detect whether the holding device (2) is arranged on the motor vehicle (3) in an operational position (BP) and/or the non-operational position (NBP) comprises a position of the holding device (2) in which it is correctly folded in.

5. Apparatus (1) according to any one of the preceding claims, **characterized in that** the holding device (2) takes the form of a holding arm and/or the detection device (5) operates using electric power.

6. Apparatus (1) according to any one of the preceding claims, **characterized in that** the apparatus (1) has at least one mounting device (6), by means of which the holding device (2) is mountable on the motor vehicle (3), and/or has at least one connection device, by means of which information as to whether the holding device (2) is arranged on the motor vehicle (2) in an operational position (BP) and/or in a non-operational position (NBP) is transferable into the motor vehicle (3).

7. Apparatus according to Claim 6, **characterized in that** the connection device is incorporated in the mounting device (6) and the mounting device (6) is in the form of a base plate.

8. Motor vehicle (3) having at least one apparatus (1) according to any one of the preceding claims.

9. Motor vehicle (3) according to Claim 8, **characterized in that** the motor vehicle (3) has a device for optically, acoustically and/or haptically communicating to a driver of the motor vehicle (3)
- that the holding device (2) is arranged on the motor vehicle (2) in the non-operational position (NBP), and/or
- that the holding device (2) is arranged on the motor vehicle (3) in the operational position (BP).

10. Motor vehicle (3) according to Claim 8 or 9, **characterized in that** the communication is produced before the start of the journey, in particular when the engine is started, or when the motor vehicle (3) starts its journey.

11. Motor vehicle (3) according to any one of Claims 8 to 10, **characterized in that** the detection device (5) is connected to a display device in the motor vehicle (3) and the display device is configured to display to a driver of the motor vehicle (3) that the holding device (2) is arranged on the motor vehicle (3) in an operational position (BP) and/or in a non-operational position (NBP).

12. Motor vehicle (3) according to any one of Claims 8 to 11, **characterized in that** the motor vehicle (3) has a display, which is operationally connected to the at least one camera (4), for displaying the region that is captured by the at least one camera (4).

13. Motor vehicle (3) according to any one of Claims 8 to 12, **characterized in that** the motor vehicle (3) has an automatic activation function for automatically activating the display and/or the at least one camera (4) if an ignition of the motor vehicle (3) is deactivated and a door of the motor vehicle (3) is opened or closed, and preferably the automatic activation function is deactivatable by a correctly folded-in holding device (2) .

14. Motor vehicle (3) according to any one of Claims 8 to 13, **characterized in that** the display and/or the at least one camera (4) is or remains deactivated, preferably despite the automatic activation function, if the detection device (5) detects that the holding device (2) is in the non-operational position (NBP), in particular in the correctly folded-in position.

## Revendications

1. Dispositif (1), à savoir construction de remplacement de miroir (1), comprenant un appareil de support (2) pour l'agencement sur un véhicule automobile (3), l'appareil de support (2) comprenant au moins une caméra (4) pour la détection d'une zone latéralement à côté et/ou derrière le véhicule automobile (3), le dispositif (1) présentant au moins un appareil de reconnaissance (5), pour reconnaître si l'appareil de support (2) et donc l'au moins une caméra (4) sont agencés dans une position de non-fonctionnement (NBP) sur le véhicule automobile (3) et la position de non-fonctionnement (NBP) comprend une position défectueuse, l'appareil de reconnaissance (5) comprenant au moins un capteur, un commutateur ou un détecteur.

2. Dispositif (1) selon la revendication 1, **caractérisé en ce que** l'appareil de support (2) est configuré pour le montage rétractable et déployable sur le véhicule automobile (3).

3. Dispositif (1) selon l'une quelconque des revendications précédentes, **caractérisé en ce que** la position de fonctionnement (BP) comprend une position orientée de manière fonctionnelle et/ou déployée de manière conforme de l'appareil de support (2).

4. Dispositif (1) selon l'une quelconque des revendications précédentes, **caractérisé en ce que** l'appareil de reconnaissance (5) est conçu pour reconnaître si l'appareil de support (2) est agencé dans une position de fonctionnement (BP) sur le véhicule automobile (3) et/ou la position de non-fonctionnement (NBP) comprend une position rétractée de manière conforme de l'appareil de support (2).

5. Dispositif (1) selon l'une quelconque des revendications précédentes, **caractérisé en ce que** l'appareil de support (2) est configuré sous forme de bras de support et/ou l'appareil de reconnaissance (5) fonctionne de manière électrique.

6. Dispositif (1) selon l'une quelconque des revendications précédentes, **caractérisé en ce que** le dispositif (1) présente au moins un appareil de montage (6), au moyen duquel l'appareil de support (2) peut être monté sur le véhicule automobile (3) et/ou présente au moins un appareil de liaison, au moyen duquel des informations, indiquant si l'appareil de support (2) est agencé dans une position de fonctionnement (BP) et/ou une position de non-fonctionnement (NBP) sur le véhicule automobile (2), peuvent être transmises dans le véhicule automobile (3) .

7. Dispositif selon la revendication 6, **caractérisé en ce que** l'appareil de liaison est incorporé dans l'appareil de montage (6) et l'appareil de montage (6) est configuré sous forme de plaque de base.

8. Véhicule automobile (3), comprenant au moins un dispositif (1) selon l'une quelconque des revendications précédentes.

9. Véhicule automobile (3) selon la revendication 8, **caractérisé en ce que** le véhicule automobile (3) présente un appareil permettant de communiquer de manière optique, acoustique et/ou haptique à un conducteur du véhicule automobile (3),
- que l'appareil de support (2) est agencé dans la position de non-fonctionnement (NBP) sur le véhicule automobile (2), et/ou
- que l'appareil de support (2) est agencé dans la position de fonctionnement (BP) sur le véhicule automobile (3) .

10. Véhicule automobile (3) selon la revendication 8 ou 9, **caractérisé en ce que** la communication est générée avant le début de la conduite, notamment au démarrage du moteur, ou au début de la conduite du véhicule automobile (3).

11. Véhicule automobile (3) selon l'une quelconque des revendications 8 à 10, **caractérisé en ce que** l'appareil de reconnaissance (5) est en liaison avec un appareil d'affichage dans le véhicule automobile (3) et l'appareil d'affichage est conçu pour indiquer à un conducteur du véhicule automobile (3) que l'appareil de support (2) est agencé dans une position de fonctionnement (BP) et/ou une position de non-fonctionnement (NBP) sur le véhicule automobile (3).

12. Véhicule automobile (3) selon l'une quelconque des revendications 8 à 11, **caractérisé en ce que** le véhicule automobile (3) présente un écran relié activement à l'au moins une caméra (4) pour afficher la zone détectée par l'au moins une caméra (4).

13. Véhicule automobile (3) selon l'une quelconque des revendications 8 à 12, **caractérisé en ce que** le véhicule automobile (3) présente une fonction d'activation automatique pour activer automatiquement l'écran et/ou l'au moins une caméra (4) lorsqu'un allumage du véhicule automobile (3) est désactivé et qu'une porte du véhicule automobile (3) est ouverte ou fermée et, de préférence, la fonction d'activation automatique peut être désactivée par un appareil de support (2) rétracté de manière conforme.

14. Véhicule automobile (3) selon l'une quelconque des revendications 8 à 13, **caractérisé en ce que** l'écran et/ou l'au moins une caméra (4), de préférence malgré la fonction d'activation automatique, est désactivé(e) ou reste désactivé(e) lorsque l'appareil de reconnaissance (5) reconnaît que l'appareil de support (2) est dans la position de non-fonctionnement (NBP), notamment la position rétractée de manière conforme.
